# EUROPEAN PATENT APPLICATION

(11) **EP 1 232 819 A2**
(43) Date of publication of application: **21.08.2002**
(21) Application number: 02001280.3
(22) Date of filing: 17.01.2002
(51) Int. Cl.: B23D 65/00, B23D 61/12

(54) **Methods for manufacturing band saw blades**

(30) Priority: 19.01.2001 US 263119 P; 08.01.2002 US 41417
(71) Applicant: MILWAUKEE ELECTRIC TOOL CORPORATION, Brookfield Wisconsin 53005 (US)
(72) Inventor: James, Thomas P., Oconomowoc, WI 53066 (US); Rohman, Ken, Cedarburg, WI 53012 (US); Simonis, David, Franklin, WI 53132 (US)
(74) Representative: Grünecker, Kinkeldey, Stockmair & Schwanhäusser Anwaltssozietät

(57) **Abstract**

Methods of manufacturing cutting blades, such as band saw blades (10). In some aspects of the invention, the method includes cutting blade stock (14) with a laser (34) and welding the blade length (50) with a laser (34) to provide a continuous cutting blade. In some aspects of the invention, the method includes cutting the blade stock (14) to provide an end edge portion (62) oriented at a non-perpendicular angle relative to an edge (18) of the blade stock (14) and welding the blade length (50) to provide a continuous cutting blade.

## Description

### FIELD OF THE INVENTION

The present invention relates to band saw blades, and more particularly, to methods for manufacturing band saw blades.

### BACKGROUND OF THE INVENTION

To manufacture band saw blades, a supply of blade stock is cut into lengths approximating the circumference of a finished band saw blade. The blade lengths are then welded. Typically, the ends of each blade length are butt-welded to each other to make a continuous cutting blade or band saw blade. Excess material resulting from welding is ground off the outer and inner surfaces of the band saw blade.

Typically, the blade stock is cut so that each end edge of the blade length is substantially perpendicular to one lateral edge of the blade length. In other words, the end edges extend perpendicularly across the length of the blade stock.

### SUMMARY OF THE INVENTION

One problem with the above-described method is that many independent steps and separate apparatus (for completing each step) are required. Specifically, in the above-described method, a separate cutting apparatus, a separate welding apparatus, and a separate grinding apparatus are required to manufacture the band saw blades. In addition to completing each step in the method, an operator is required to move each blade from one apparatus to the next to accomplish the method. As a result, the method is labor-intensive and time-consuming.

Another problem with the above-described method is that, during butt welding, excess material is produced at the weld. This excess material must be ground off the inner and outer surfaces of the band saw blade, requiring additional finishing work on each band saw blade. Also, the resulting excess material is lost from the blade length, changing the diameter of the resulting band saw blade. This results in band saw blades having inconsistent diameters. In addition, the material lost from the blade length typically results in a misalignment of the cutting teeth and of the gullets between the cutting teeth.

Yet another problem with the above-described method is that, to grind the excess material from the inner surface of the band saw blade, the band saw blade is inverted, and the excess material is ground from the now outer-facing inner surface of the band saw blade. If the operator forgets to reverse the band saw blade to its original, cutting orientation (with the inner surface facing inwardly), the band saw blade teeth face in the wrong direction so that the blade actually cuts backwards, reducing the efficiency of the cutting and increasing the wear on the rearward faces of the cutting teeth.

A further problem with the above-described method is that some welding apparatus, such as an electon beam welding apparatus, require a vacuum in which to weld the band saw blade, increasing the space requirement for the apparatus.

Another problem with the above-described method is that, when the end edges are perpendicular across the length of the band saw blade, the resulting weld also extends perpendicularly across the length of the band saw blade. During cutting operations, the band saw blade flexes and relaxes, causing a stress line which also extends perpendicularly across the length of the band saw blade. The stress line is co-linear with the weld, and the band saw blade will typically break along the line of the weld.

The present invention provides methods of manufacturing band saw blades which substantially alleviate one or more of the above-described and other problems with the above-described method. In some aspects of the invention, the method includes cutting the blade stock with a laser and welding the ends of a blade length with a laser to provide a band saw blade. Preferably, the blade stock is cut, and the blade length is welded by a single laser apparatus. In some aspects of the invention, the ends of the blade stock are cut at a non-perpendicular angle relative to a lateral edge of the blade stock, and the non-perpendicular ends of a blade length are welded to provide a band saw blade. The resulting weld also extends across the length of the band saw blade at a non-perpendicular angle so that the weld line is not co-linear with the stress lines resulting during cutting.

More particularly, the invention provides a method of manufacturing a continuous cutting blade, the method including the acts of providing a length of blade stock having a first end, cutting the blade stock with a laser to provide a blade length from the first end to a second end, positioning the first end adjacent the second end, and welding the first end to the second end with a laser to provide a continuous cutting blade. Preferably, the method further includes the act of providing a laser assembly, and the cutting act and the welding act are accomplished using the laser assembly.

During the welding act, a heat-affected zone may be produced on the cutting blade, and the method preferably further comprises, after the welding act, the act of annealing the heat-affected zone. In some aspects, the cutting act, the welding act and the annealing act may be accomplished using a single laser assembly. In other aspects, the cutting act and the welding act are accomplished using the laser assembly, and the annealing act preferably includes annealing the heat-affected zone with an inductive coil assembly.

The method may further include, before the welding act, the act of preheating the first end and the second end. The preheating act may be accomplished using a laser, and the cutting act, the preheating act and the welding act may be accomplished using the laser assembly.

The blade stock has a first edge and a second edge spaced from the first edge across the length, and the cutting act preferably includes cutting the blade stock to provide a second end having an end edge portion oriented at a non-perpendicular angle relative to the first edge. Preferably, the second end has a substantially linear end edge, and the end edge is preferably oriented at a 45° angle relative to the first edge.

Also, the present invention provides a method of manufacturing a continuous cutting blade, the method including the acts of providing a length of blade stock having a first end and a first edge and a second edge spaced apart across the length, cutting fine blade stock to provide a blade length from the first end to a second end, the second end having an end edge portion oriented at a non-perpendicular angle relative to the first edge, positioning the first end adjacent the second end, and welding the first end to the second end to provide a continuous cutting blade.

Preferably, the first end has a first end edge portion oriented at a non-perpendicular angle relative to the first edge complementary to the angle of the end edge portion of the second end. The first end may have a first end edge portion oriented at substantially the same non-perpendicular angle relative to the first edge. The method may further include before the providing act, the acts of providing the blade stock, and cutting the blade stock to provide a first end, the first end having a first end edge portion oriented at a non-perpendicular angle relative to the first edge. Preferably, the second end has a substantially linear end edge, and the end edge is preferably oriented at a 45° angle relative to the first edge.

The cutting act may include cutting the blade stock with a laser. The welding act may include welding the first end to the second end with a laser. Preferably, the method further includes the act of providing a laser assembly, and the cutting act and the welding act may be accomplished using the laser assembly.

The method may also include, before the welding act, the act of preheating the first end and the second end. The preheating act may be accomplished using a laser. In addition, during the welding act, a heat-affected zone may be produced on the cutting blade, and the method preferably further comprises, after the welding act, the act of annealing the heat-affected zone. Preferably, the annealing act includes annealing the heat-affected zone with an inductive coil assembly.

In addition, the present invention provides a method of manufacturing a continuous cutting blade, the method including the acts of providing a length of blade stock having a first end and a first edge and a second edge spaced apart across the length, cutting the blade stock with a laser to provide a blade length from the first end to a second end, the second end having an end edge portion oriented at a non-perpendicular angle relative to the first edge, positioning the first end adjacent the second end, and welding the first end to the second end with a laser to provide a continuous cutting blade.

Preferably, the first end has a first end edge portion oriented at a non-perpendicular angle relative to the first edge complementary to the angle of the end edge portion of the second end. The first end may have a first end edge portion oriented at substantially the same non-perpendicular angle relative to the first edge. Preferably, the method includes, before the providing act, the acts of providing the blade stock, and cutting the blade stock to provide a first end, the first end having a first end edge portion oriented at a non-perpendicular angle relative to the first edge. Preferably, the second end has a substantially linear end edge, and the end edge is preferably oriented at a 45° angle relative to the first edge.

The method may further include the act of providing a laser assembly, and the cutting act and the welding act may be accomplished using the laser assembly. During the welding act, a heat-affected zone may be produced on the cutting blade, and the method preferably further comprises, after the welding act, the act of annealing the heat-affected zone. Preferably, the annealing act includes annealing the heat-affected zone with the inductive coil assembly.

The method may further include, before the welding act, the act of preheating the first end and the second end. The preheating act may be accomplished using a laser, and the cutting act, the preheating act and the welding act may be accomplished using the laser assembly.

Further, the present invention provides a continuous cutting blade provided by a method including the acts of providing a length of blade stock having a first end, cutting the blade stock with a laser to provide a blade length from the first end to a second end, positioning the first end adjacent the second end, and welding the first end to the second end with a laser to provide a continuous cutting blade.

Preferably, the method further includes the act of providing a laser assembly, and the cutting act and the welding act may be accomplished using the laser assembly. During the welding act, a heat-affected zone may be produced on the cutting blade, and the method preferably further comprises, after the welding act, the act of annealing the heat-affected zone. In some aspects, the cutting act, the welding act and the annealing act are accomplished using a single laser assembly. In other aspects, the cutting act and the welding act are accomplished using the laser assembly, and the annealing act includes annealing the heat-affected zone with an inductive coil assembly.

The method may further include, before the welding act, the act of preheating the first end and the second end, and the preheating act may be accomplished using a laser. The cutting act, the preheating act and the welding act may be accomplished using the laser assembly.

The blade stock has a first edge and a second edge spaced from the first edge across the length, and the cutting act preferably includes cutting the blade stock to provide a second end having an end edge portion oriented at a non-perpendicular angle relative to the first edge. Preferably, the second end has a substantially linear end edge, and the end edge is preferably oriented at a 45° angle relative to the first edge.

Also, the present invention provides a continuous cutting blade provided by a method including the acts of providing a length of blade stock having a first end and a first edge and a second edge spaced apart across the length, cutting the blade stock to provide a blade length from the first end to a second end, the second end having an end edge portion oriented at a non-perpendicular angle relative to the first edge, positioning the first end adjacent the second end, and welding the first end to the second end to provide a continuous cutting blade.

Preferably, the first end has a first end edge portion oriented at a non-perpendicular angle relative to the first edge complementary to the angle of the end edge portion of the second end. The first end may have a first end edge portion oriented at substantially the same non-perpendicular angle relative to the first edge. Preferably, the method further includes, before the providing act, the acts of providing the blade stock, and cutting the blade stock to provide a first end, the first end having a first end edge portion oriented at a non-perpendicular angle relative to the first edge. Preferably, the second end has a substantially linear end edge, and the end edge is preferably oriented at a 45° angle relative to the first edge.

The cutting act may include cutting the blade stock with a laser. The welding act may include welding the first end to the second end with a laser. Preferably, the method further includes the act of providing a laser assembly, and wherein the cutting act and the welding act may be accomplished using the laser assembly. The method may further include, before the welding act, the act of preheating the first end and the second end. The preheating act may be accomplished using a laser assembly.

In addition, the present invention provides a continuous cutting blade provided by a method including the acts of providing a length of blade stock having a first end and a first edge and a second edge spaced apart across the length, cutting the blade stock with a laser to provide a blade length from the first end to a second end, the second end having an end edge portion oriented at a non-perpendicular angle relative to the first edge, positioning the first end adjacent the second end, and welding the first end to the second end with a laser to provide a continuous cutting blade.

Preferably, the first end has a first end edge portion oriented at a non-perpendicular angle relative to the first edge complementary to the angle of the end edge portion of the second end. The first end has a first end edge portion may be oriented at substantially the same non-perpendicular angle relative to the first edge. Preferably, the method further includes, before the providing act, the acts of providing the blade stock, and cutting the blade stock to provide a first end, the first end having a first end edge portion oriented at a non-perpendicular angle relative to the first edge. Preferably, the second end has a substantially linear end edge, and the end edge is preferably oriented at a 45° angle relative to the first edge.

The method may further include the act of providing a laser assembly, and the cutting act and the welding act may be accomplished using the laser assembly. The method may further include, before the welding act, the act of preheating the first end and the second end. The preheating act may be accomplished using laser. The cutting act, the preheating act and the welding act may be accomplished using the laser assembly.

One independent advantage of the present invention is that, in some aspects of the invention, the method requires fewer steps and fewer apparatus to accomplish these steps. In some constructions, the blade stock is cut and welded by a single apparatus, such as a laser assembly. As a result, the method is less labor-intensive and time-consuming than previous methods.

Another independent advantage of the present invention is that, in some aspects of the invention, laser welding produces little or no excess material at the weld compared to typical butt welding. As a result, excess material is not required to be ground from the weld, eliminating a step in the method. Also, because material is not lost from the blade length during welding, the resulting band saw blades have more consistent diameters. In addition, the teeth and gullets of the cutting surface are more easily aligned and do not become misaligned due to loss of material during welding.

Yet another independent advantage of the present invention is that, in some aspects of the invention, because excess material is not created during laser welding, the operator does not have to grind the inner and outer surfaces of the weld. As a result, the band saw blade does not have to be inverted to grind the inner surface and will not inadvertently be left in this inverted orientation.

A further independent advantage of the present invention is that, in some aspects of the invention, because the weld does not extend perpendicularly across the length of the blade and is not co-linear with the stress lines created during cutting, the stress lines have only a point contact with the weld. As a result, the blade does not break as easily along the weld.

Other independent features and independent advantages of the present invention will become apparent to those skilled in the art upon review of the following detailed description, claims and drawings.

### BRIEF DESCRIPTION OF THE DRAWINGS

Fig. 1 is a perspective view of a laser assembly for use in a method for manufacturing band saw blades.
Fig. 2 is a top view of a band saw blade and illustrates the cutting of the blade stock.
Fig. 3 is a top view of the band saw blade and illustrates the pre-heating of the ends of the blade length.
Fig. 4 is a top view of a band saw blade and illustrates the welding of the ends of the blade length.

Before one embodiment of the invention is explained in detail, it is to be understood that the invention is not limited in its application to the details of the construction and the arrangements of the components set forth in the following description or illustrated in the drawings. The invention is capable of other embodiments and of being practiced or carried out in various ways. Also, it is understood that the phraseology and terminology used herein is for the purpose of description and should not be regarded as limiting.

### DETAILED DESCRIPTION OF THE PREFERRED EMBODIMENT

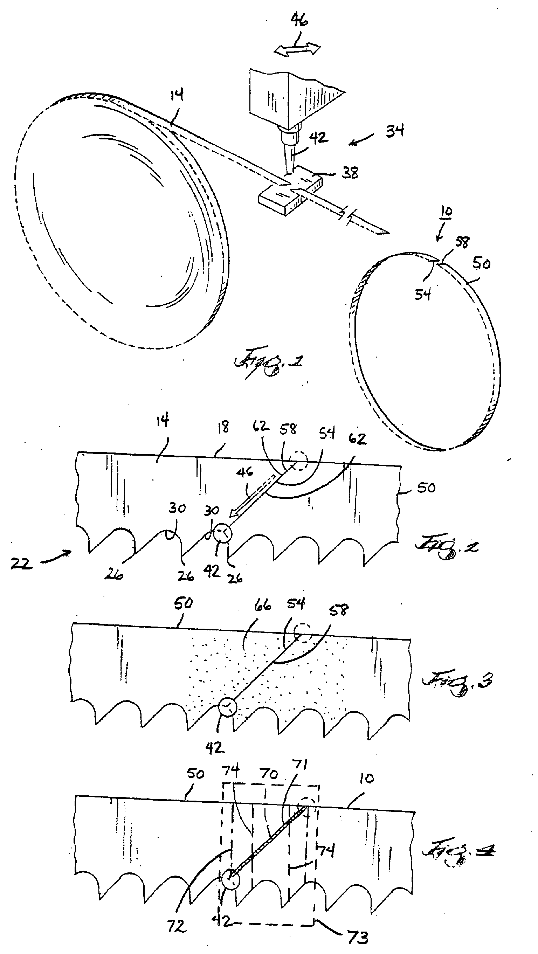

Methods for manufacturing a continuous cutting blade, such as a band saw blade 10, and embodying the invention are illustrated in the Figures. As shown in Fig. 1, the band saw blades 10 are made from a supply of blade stock 14. As shown in Fig. 2, the blade stock 14 has a substantially linear first edge 18 and a cutting edge 22 spaced apart across the length of the blade stock 14. Cutting teeth 26 and gullets 30 are formed on the cutting edge 22.

As shown in Fig. 1, in some aspects of the invention, a laser assembly 34 is provided. The laser assembly 34 includes a support portion 38 for supporting the blade stock 14 and the band saw blade 10 and a laser head 42. In the illustrated construction, the laser head 42 is movable relative to the support 38 along a path 46.

As shown in Figs. 1-2, the blade stock 14 is cut to provide a blade length 50 for the band saw blade 10. The blade length 50 is cut to have a first end 54 and a second end 58. Each end 54 and 58 has an end edge 62. As shown in Figs. 1-2, in some aspects of the invention, the laser assembly 34 is used to cut the blade stock 14 into individual blade lengths 50. To do so, the blade stock 14 is supported on the support 38, and the laser head 42 is moved relative to the support 38 and the blade stock 14 to cut the blade stock 14.

As shown in Fig. 2, in some aspects of the invention, the blade stock 14 is cut so that the end edge 62 is oriented at a non-perpendicular angle with respect to the first edge 18. Preferably, the end edge 62 is oriented at a 45° angle relative to the first edge 18. However, the end edge 62 may be oriented at another non-perpendicular angle relative to the first edge 18. Also, in other constructions (not shown), the end edge may be cut to have a non-linear or patterned edge, such as a saw-tooth or a dove-tail pattern. The purpose for the non-perpendicular and/or non-linear end edge 62 is explained below in more detail.

After the blade stock 14 is cut to provide a blade length 50, in some aspects of the invention, the first and second ends 54 and 58 of the blade length are then positioned adjacent to one another in the laser assembly 34. In the preferred embodiment, the ends 54 and 58 are then welded, as explained below in more detail.

In some constructions, before welding, a pre-heated material region 66 may be formed at the ends 54 and 58. A pre-heating technique, such as induction pre-heating or laser pre-heating, may be used to form the pre-heated material region 66. In the illustrated construction, if the ends 54 and 58 are pre-heated, the laser head 42 is moved relative to the ends 54 and 58 to form the pre-heated material region 66. Pre-heating of the ends 54 and 58 may be necessary or desirable based upon, for example, the material of the blade stock 14.

As shown in Fig. 4, in some aspects of the invention, the ends 54 and 58 are then welded by the laser assembly 34 to form a weld 70. In the illustrated construction, the laser head 42 is moved on the path 46 relative to the ends 54 and 58.

Welding produces a heat-affected zone 71 on the band saw blade 10 in the area of the weld 70. The heat-affected zone 71 and the weld 70 may be hard and brittle. In order to make the band saw blade 10 tougher (i.e., better able to withstand the stresses associated with the flexing and relaxing of the band saw blade 10 during cutting operations), the heat-affected zone 71 is preferably annealed after welding is completed. The heat-affected zone 71 is re-heated in an annealed zone 72 to soften and re-crystallize the material of the band saw blade 10. In the illustrated construction, once welding and annealing are completed, the band saw blade 10 is substantially complete.

In some constructions, the laser assembly 34 may be de-focused and then used to anneal the band saw blade 10 along the heat-affected zone 71 and the weld 70. In such constructions, the laser head 42 is moved on the path 46 relative to the heat-affected zone 71 and the weld 70.

In the preferred embodiment, an inductive coil assembly 73 (schematically illustrated) is provided to anneal heat-affected zone 71 and the weld 70. The inductive coil assembly 73 is preferably arranged to provide an annealed zone 72 which encompasses the heat-affected zone 71 and the weld 70 and which has boundaries extending substantially perpendicular to the edges 18 and 22. In other constructions (not shown), the inductive coil assembly may be arranged to provide an annealed zone (not shown) which encompasses the heat-affected zone 71 and the weld 70 and which has boundaries extending parallel to the heat-affected zone 71 and the weld 70.

It should be understood that, in other constructions (not shown), annealing of the band saw blade 10 may not be necessary or desirable after welding, while keeping with aspects of the teachings of the present invention.

As shown in Figs. 2-4, in some aspects of the invention, the end edge 62 of the ends 54 and 58 of the blade length 50 are oriented at a non-perpendicular angle relative to the first edge 18. During cutting operations, the constant flexing and relaxing of the band saw blade 10 causes linear stress on the band saw blade 10. Typically, the stress is concentrated on a stress line 74 which is substantially perpendicular to the length of the band saw blade 10. As shown in Fig. 4, due to the non-perpendicular orientation of the weld 70, the weld 70 is not co-linear with the stress line 74, reducing the portion of the weld 70 which is experiencing stress, indicated by the stress line 74, at any given time. This reduces the likelihood that the band saw blade 10 will break along the weld 70.

In some aspects of the invention, the band saw blade 10 is manufactured with fewer steps and requires only a single apparatus, such as the laser assembly 34, to cut, pre-heat and weld the band saw blade 10. As a result, the method of the present invention is less labor-intensive and less time-consuming. In some aspects of the invention, the blade stock 14 is cut at a non-perpendicular angle relative to the first edge 18, and the ends 54 and 58 are welded to form a non-perpendicular weld 70, reducing the stress experienced by the weld 70 at a given time.

Various features of the invention are set forth in the following claims.

## Claims

1. A method of manufacturing a continuous cutting blade, said method comprising the acts of:
providing a length of blade stock having a first end;
cutting the blade stock with a laser to provide a blade length from the first end to a second end;
positioning the first end adjacent the second end; and
welding the first end to the second end with a laser to provide a continuous cutting blade.

2. The method as set forth in Claim 1 and further comprising the act of providing a laser assembly, wherein the cutting act and the welding act are accomplished using the laser assembly.

3. The method as set forth in Claim 1 wherein, during the welding act, a heat-affected zone is produced on the cutting blade, and wherein said method further comprises, after the welding act, the act of annealing the heat-affected zone.

4. The method as set forth in Claim 3 and further comprising the act of providing a laser assembly, wherein the cutting act, the welding act and the annealing act are accomplished using the laser assembly.

5. The method as set forth in Claim 3 and further comprising the acts of:
providing a laser assembly, the cutting act and the welding act being accomplished using the laser assembly; and
providing an inductive coil assembly, the annealing act including annealing the heat-affected zone with the inductive coil assembly.

6. The method as set forth in Claim 1 and further comprising, before the welding act, the act of preheating the first end and the second end with a laser.

7. The method as set forth in Claim 6 and further comprising the act of providing a laser assembly, wherein the cutting act, the preheating act and the welding act are accomplished using the laser assembly.

8. The method as set forth in Claim 1 wherein the blade stock has a first edge and a second edge spaced from the first edge across the length, and wherein the cutting act includes cutting the blade stock to provide a second end having an end edge portion oriented at a non-perpendicular angle relative to the first edge.

9. The method as set forth in Claim 8 wherein the second end has a substantially linear end edge.

10. The method as set forth in Claim 8 wherein the end edge is oriented at a 45° angle relative to the first edge.

11. A method of manufacturing a continuous cutting blade, said method comprising the acts of:
providing a length of blade stock having a first end and a first edge and a second edge spaced apart across the length;
cutting the blade stock to provide a blade length from the first end to a second end, the second end having an end edge portion oriented at a non-perpendicular angle relative to the first edge;
positioning the first end adjacent the second end; and
welding the first end to the second end to provide a continuous cutting blade.

12. The method as set forth in Claim 11 wherein the first end has a first end edge portion oriented at a non-perpendicular angle relative to the first edge complementary to the angle of the end edge portion of the second end.

13. The method as set forth in Claim 11 wherein the first end has a first end edge portion oriented at substantially the same non-perpendicular angle relative to the first edge.

14. The method as set forth in Claim 11 and further comprising, before the providing act, the acts of:
providing the blade stock; and
cutting the blade stock to provide a first end, the first end having a first end edge portion oriented at a non-perpendicular angle relative to the first edge.

15. The method as set forth in Claim 11 wherein the second end has a substantially linear end edge.

16. The method as set forth in Claim 11 wherein the end edge is oriented at a 45° angle relative to the first edge.

17. The method as set forth in Claim 11 wherein the cutting act includes cutting the blade stock with a laser.

18. The method as set forth in Claim 11 wherein the welding act includes welding the first end to the second end with a laser.

19. The method as set forth in Claim 18 wherein the cutting act includes cutting the blade stock with a laser, wherein said method further comprises the act of providing a laser assembly, and wherein the cutting act and the welding act are accomplished using the laser assembly.

20. The method as set forth in Claim 19 and further comprising, before the welding act, the act of preheating the first end and the second end with the laser assembly.

21. The method as set forth in Claim 11 wherein, during the welding act, a heat-affected zone is produced on the cutting blade, and wherein said method further comprises, after the welding act, the act of annealing the heat-affected zone.

22. The method as set forth in Claim 21 and further comprising the acts of:
providing a laser assembly, the cutting act including cutting the blade stock with the laser assembly, the welding act including welding the first end to the second end with the laser assembly; and
providing an inductive coil assembly, the annealing act including annealing the heat-affected zone with the inductive coil assembly.

23. A method of manufacturing a continuous cutting blade, said method comprising the acts of:
providing a length of blade stock having a first end and a first edge and a second edge spaced apart across the length;
cutting the blade stock with a laser to provide a blade length from the first end to a second end, the second end having an end edge portion oriented at a non-perpendicular angle relative to the first edge;
positioning the first end adjacent the second end; and
welding the first end to the second end with a laser to provide a continuous cutting blade.

24. The method as set forth in Claim 23 wherein the first end has a first end edge portion oriented at a non-perpendicular angle relative to the first edge complementary to the angle of the end edge portion of the second end.

25. The method as set forth in Claim 23 wherein the first end has a first end edge portion oriented at substantially the same non-perpendicular angle relative to the first edge.

26. The method as set forth in Claim 23 and further comprising, before the providing act, the acts of:
providing the blade stock; and
cutting the blade stock to provide a first end, the first end having a first end edge portion oriented at a non-perpendicular angle relative to the first edge.

27. The method as set forth in Claim 23 wherein the second end has a substantially linear end edge.

28. The method as set forth in Claim 23 wherein the end edge is oriented at a 45° angle relative to the first edge.

29. The method as set forth in Claim 23 and further comprising the act of providing a laser assembly, wherein the cutting act and the welding act are accomplished using the laser assembly.

30. The method as set forth in Claim 23 wherein, during the welding act, a heat-affected zone is produced on the cutting blade, and wherein said method further comprises, after the welding act, the act of annealing the heat-affected zone.

31. The method as set forth in Claim 30 and further comprising the acts of:
providing a laser assembly, the cutting act and the welding act being accomplished using the laser assembly; and
providing an inductive coil assembly, the annealing act including annealing the heat-affected zone with the inductive coil assembly.

32. The method as set forth in Claim 23 and further comprising, before the welding act, the act of preheating the first end and the second end with a laser.

33. A continuous cutting blade provided by a method comprising the acts of:
providing a length of blade stock having a first end and a first edge and a second edge spaced apart across the length;
cutting the blade stock with a laser to provide a blade length from the first end to a second end, the second end having an end edge portion oriented at a non-perpendicular angle relative to the first edge;
positioning the first end adjacent the second end; and
welding the first end to the second end with a laser to provide a continuous cutting blade.

34. The blade as set forth in Claim 33 wherein the first end has a first end edge portion oriented at a non-perpendicular angle relative to the first edge complementary to the angle of the end edge portion of the second end.

35. The blade as set forth in Claim 33 wherein the first end has a first end edge portion oriented at substantially the same non-perpendicular angle relative to the first edge.

36. The blade as set forth in Claim 33 wherein the method further comprises, before the providing act, the acts of:
providing the blade stock; and
cutting the blade stock to provide a first end, the first end having a first end edge portion oriented at a non-perpendicular angle relative to the first edge.

37. The blade as set forth in Claim 33 wherein the second end has a substantially linear end edge.

38. The blade as set forth in Claim 33 wherein the end edge is oriented at a 45° angle relative to the first edge.

39. The blade as set forth in Claim 33 wherein the method further comprises the act of providing a laser assembly, and wherein the cutting act and the welding act are accomplished using the laser assembly.

40. The blade as set forth in Claim 33 wherein, during the welding act, a heat-affected zone is produced on the cutting blade, and wherein the method further comprises, after the welding act, the act of annealing the heat-affected zone.

41. The blade as set forth in Claim 40 wherein the method further comprises the act of providing a laser assembly, and wherein the cutting act, the welding act and the annealing act are accomplished using the laser assembly.

42. The blade as set forth in Claim 40 wherein the method further comprises the acts of:
providing a laser assembly, the cutting act and the welding act being accomplished using the laser assembly; and
providing an inductive coil assembly, the annealing act including annealing the heat-affected zone with the inductive coil assembly.

43. The blade as set forth in Claim 33 wherein the method further comprises, before the welding act, the act of preheating the first end and the second end with a laser.

44. The blade as set forth in Claim 43 wherein the method further comprises the act of providing a laser assembly, and wherein the cutting act, the preheating act and the welding act are accomplished using the laser assembly.
